# EUROPÄISCHE PATENTANMELDUNG

(11) **EP 1 795 101 A1**
(43) Veröffentlichungstag der Anmeldung: **13.06.2007**
(21) Anmeldenummer: 06024320.1
(22) Anmeldetag: 23.11.2006
(51) Int. Cl.: A47J 45/06

(54) **Schwenkbarer Henkel für ein Kochgefäß**

(30) Priorität: 30.11.2005 IT MI20052289
(71) Anmelder: BALLARINI PAOLO & FIGLI S.p.A., 46017 Rivarolo Mantovano (MN) (IT)
(72) Erfinder: Garziera, Roberto Vincenzo, 22070 Appiano Gentile (IT)
(74) Vertreter: Mayer, Hans Benno

(57) **Zusammenfassung**

Schwenkbarer Henkel für ein Kochgefäß, mit einem U-förmig ausgebildeten Ende und frei abstehenden Armen, die auf das Gefäß hin gerichtet sind, wobei von jedem Ende der Arme des Henkels Schwenkzapfen abstehen, die sich gegenüberstehen und in einem Aufnahmekörper angeordnet sind, wobei der Aufnahmekörper an einem Vorsprung befestigt ist, der fest an der Wand des Gefäßes angeordnet ist, und in eine Ausnehmung der Halterung eine Feder eingesetzt ist und diese Feder mit einer Seite am Boden der Ausnehmung und mit der anderen Seite an einer von zwei Positionierflächen anliegt, die in einem Winkel von 90° zueinander stehen und durch eine Verlängerung gebildet sind, die von jedem Schwenkzapfen abstehen.

## Beschreibung

Die vorstehende Erfindung betrifft einen schwenkbaren Henkel für ein Kochgefäß.

Die bekannten Kochgefäße weisen üblicherweise Henkel auf, die radial von einer das Kochgefäß begrenzenden Wand abstehen.

So sind Henkel bekannt geworden, die aus Metall bestehen und direkt auf die Wand des Gefäßes aufgeschweißt sind.

Es sind auch Henkel bekannt geworden, die aus einer plattenförmigen Aufnahme bestehen, welche fest an der Begrenzungswand des Kochgefäßes befestigt sind, und die Metallplatte mit einem Bauteil verbunden ist, das aus Kunststoff besteht.

Beide der bekannten Henkel haben den Nachteil, dass zum Unterbringen der entsprechenden Gefäße im Inneren einer Schublade ein erheblicher Platzbedarf besteht, dies aufgrund der radial vom Behälter abstehenden Griffe.

Auch für das gegenseitige Ineinanderstapeln der genannten Kochbehälter besteht ein erheblicher Platzbedarf, da aufgrund der radial abstehenden Griffe keine Möglichkeit gegeben ist, mehrere Behälter mit abnehmendem Durchmesser unter geringstmöglichem Platzbedarf ineinander zu stapeln.

Es ist daher Aufgabe der vorstehenden Erfindung, ein Kochgefäß vorzuschlagen, das mit Griffen ausgerüstet ist und die Möglichkeit eröffnet, diese Kochgefäße im Inneren einer Schublade eines Küchenmöbels bei geringstem Platzbedarf unterzubringen.

Erfindungsgemäß wird diese Aufgabe mit einem Henkel für ein Kochgefäß geschaffen, der schwenkbar gegenüber der Wand eines Kochgefäßes angeordnet ist und sich dadurch kennzeichnet, dass er U-förmige Gestalt aufweist und frei abstehende Arme auf das Kochgefäß gerichtet sind, wobei von jedem Ende der Arme des Henkels Schwenkzapfen abstehen, die sich gegenüberstehen und dass diese Zapfen in der Ausnehmung eines Aufnahmekörpers angeordnet sind und der Aufnahmekörper an einem Vorsprung befestigt ist, der fest mit der Wand des Gefäßes verbunden ist, daß in eine Ausnehmung der Halterung ferner eine Feder eingesetzt ist, wobei die Feder mit einer Seite am Boden der Ausnehmung und mit der anderen Seite an einer von zwei Positionierflächen anliegt, die in einem Winkel von 90° zueinander stehen und durch eine Verlängerung gebildet sind, die von jedem Schwenkzapfen absteht.

Weitere Merkmale der Erfindung sind der nun folgenden Beschreibung sowie den beigefügten Zeichnungen zu entnehmen.

Der Gegenstand der vorstehenden Erfindung wird nun genauer beschrieben und anhand eines Ausführungsbeispieles in den beigefügten Zeichnungen dargestellt.

Es zeigen:
Figur 1 eine Hälfte des Griffes gemäß der vorstehenden Erfindung und in einer Gebrauchslage, in der der Griff radial vom Gefäß absteht,
Figur 2 den Griff nach Figur 1, wobei aus Gründen der Deutlichkeit einige Bauteile entfernt wurden,
Figur 3 den Griff gemäß Figur 1 in einer Ruhestellung, in der der Griff parallel zur Wand des Kochgefäßes angeordnet ist,
Figur 4 den Griff gemäß Figur 3, wobei aus Gründen der Übersichtlichkeit einige Bauteile entfernt wurden.

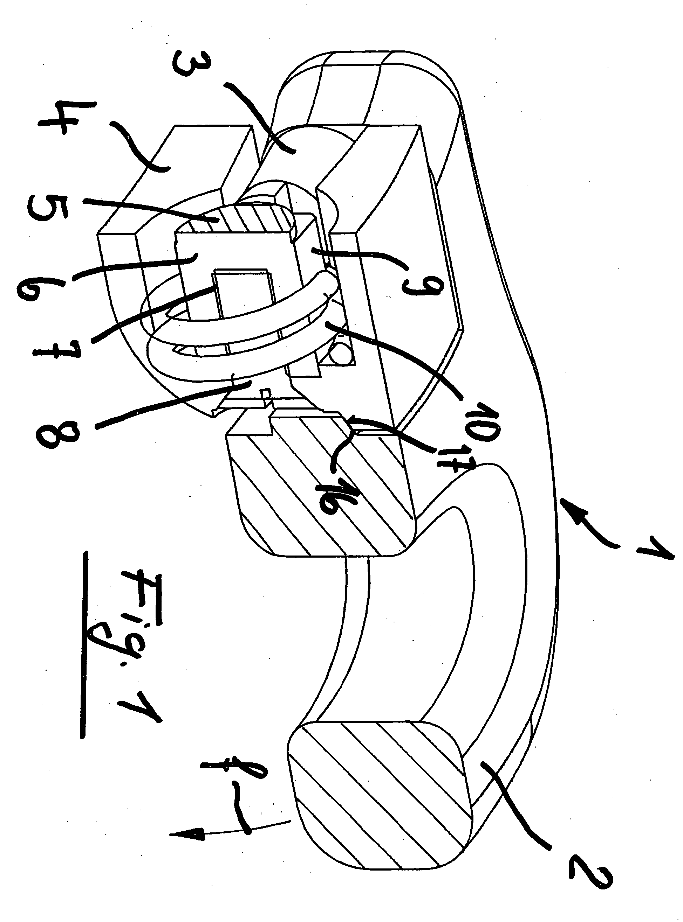

Wie der Figur 1 zu entnehmen ist, weist der Griff 1 oder Henkel, der aus Gründen der Übersichtlichkeit nur zur Hälfte dargestellt ist, einen Körper auf, der in vorteilhafter Weise aus wärmeisolierendem synthetischem Material hergestellt ist.

Der Körper des Griffes weist U-Form auf und von beiden Enden der Arme steht ein Schwenkzapfen 3 ab, der in einer Ausnehmung eines Lagerkörpers 4 angeordnet ist.

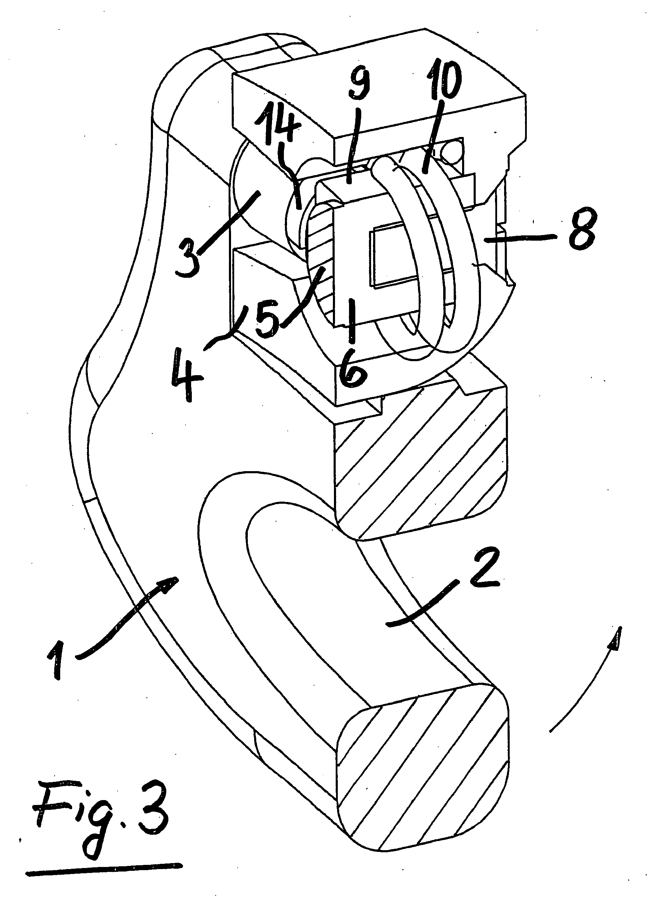

Der Griff 2 kann von einer Gebrauchslage, in der der Griff radial von der Wand eines Behälters (Figur 1) absteht, in eine Ruhelage verschwenkt werden, in der der Griff parallel zur Wand des Behälters angeordnet ist (Figur 3).

Mit dem Behälter (nicht dargestellt) steht fest über eine Verbindungsfläche 5 ein Vorsprung 6 in Verbindung.

Dieser Vorsprung 6 weist eine Bohrung 7 mit einem Gewinde auf, in das eine Schraube 8 eindrehbar ist, die in gewünschter Lage den Haltekörper lagert, der gesamthaft mit 4 gekennzeichnet ist.

Dieser Haltekörper 4 weist neben einer Ausnehmung für die Aufnahme der Schwenkzapfen 3 eine Kammer 9 auf, die eine Schraubenfeder 10 aufnimmt.

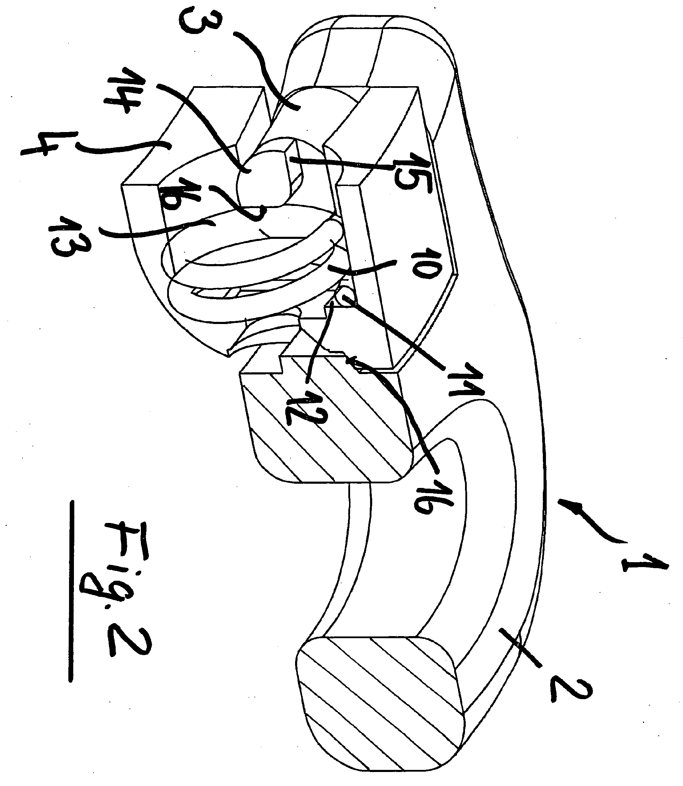

Wie der Figur 2 zu entnehmen ist, liegt die Schraubenfeder 10 mit einem Ende 11 am Boden 12 der Ausnehmung 9 an, wogegen das gegenüberliegende Ende der Feder 10 an einer Fläche 16 anliegt, die von einem Vorsprung 14 gebildet wird, der vom Zapfen 3 absteht (Figur 2).

Der Vorsprung 14 weist zwei Steuerflächen sowie Anlageflächen 15 und 16 auf, welche senkrecht zueinander angeordnet sind.

Am anderen Ende, welches dem Zapfen 3 gegenüberliegt, weist der Griff 2 eine Anschlagstufe 17 auf, welche an einer Stufe 16 der Halterung 4 anliegt.

Dank der Vorsehung einer vorgespannten Feder 10, welche zwischen dem Boden 12 der Kammer 9 und dem Vorsprung 14 angeordnet ist, erfolgt ein Festlegen des Griffes 2 in waagerechter Anordnung, wie in Figur 1 und 2 dargestellt.

Durch Schwenkbewegung eines Griffes 2, wie in Figur 1 durch den Pfeil (f) dargestellt, erfolgt ein Zusammendrücken der Feder 10, die Stufe 17 des Griffes 2 entfernt sich vom Anschlag 16 der Lagerung 4 und allmählich tritt mit dem Ende 13 der Feder 10 die Fläche 15 in Kontakt, welche vom Schwenkzapfen 3 absteht.

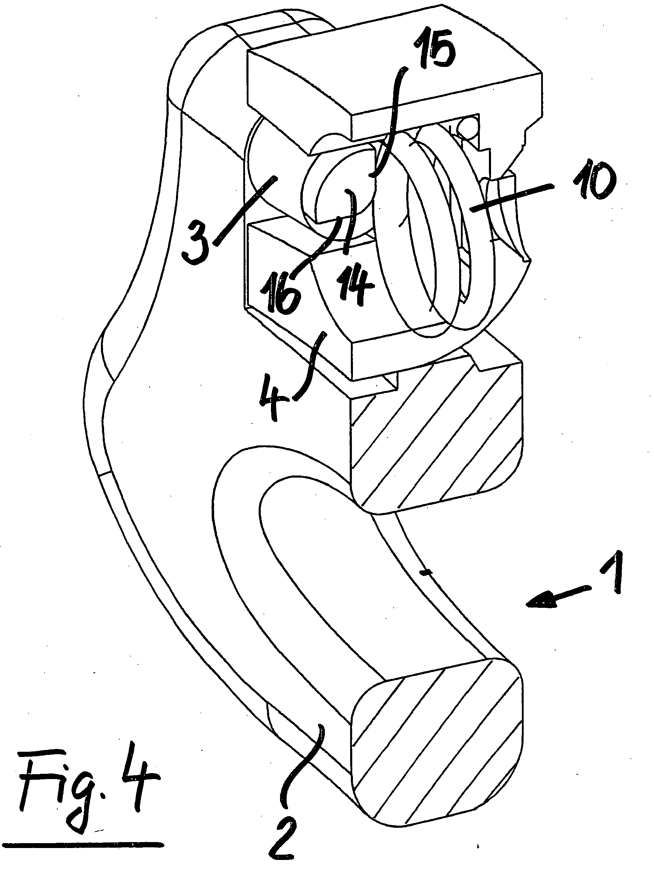

In dieser Stellung wird, dank der über die Feder 10 ausgeübten Kraft, der Griff erneut in der in den Figuren 3 und 4 dargestellten Stellung blockiert, wodurch der Griff parallel zur Außenwand des Kochgefäßes (nicht dargestellt) zu liegen kommt, um somit ein Einlagern oder ein Stapeln mehrerer Kochgefäße mit einem Minimum an Platzbedarf zu ermöglichen.

## Patentansprüche

1. Schwenkbarer Henkel, der gegenüber der Wand eines Kochgefäßes schwenkbar ist, **dadurch gekennzeichnet, dass** dieser ein U-förmiges Ende aufweist, mit freien Armen, die auf das Kochgefäß hin gerichtet sind, wobei von jedem Ende der Arme Schwenkzapfen (3) abstehen, die sich gegenüberliegen, in der Kammer (9) einer Halterung (4) vorgesehen sind und die Halterung (4) an einem Vorsprung (6) befestigt (8) ist, wobei der Vorsprung (6) an der Wand des Kochgefäßes befestigt (5) ist und in der Kammer (9) der Halterung (4) eine Feder (10) angeordnet ist, und die Feder (10) mit einer Seite am Boden der Kammer (9) anliegt und mit der anderen Seite an einer von zwei Flächen (15, 16) anliegt, die in einem Winkel von 90° zueinander angeordnet sind, und von einer Verlängerung (14) gebildet sind, die von jedem Schwenkzapfen (3) abstehen.

2. Schwenkbarer Henkel, **dadurch gekennzeichnet, dass** an dem dem Schwenkzapfen (3) gegenüberliegenden Ende, der Henkel (2) eine Anschlagstufe (17) aufweist, die an einer Stufe (16) der Halterung (4) anliegt.
